# EUROPEAN PATENT APPLICATION

(11) **EP 4 703 447 A1**
(43) Date of publication of application: **04.03.2026**
(21) Application number: 24306418.5
(22) Date of filing: 30.08.2024
(51) Int. Cl.: C09J 123/14, C08L 23/14

(54) **HOT MELT ADHESIVE COMPOSITION**

(71) Applicant: Bostik SA, 92800 Puteaux (FR)
(72) Inventor: BARBIER, Lucile, 60280 Venette (FR); BELLINI, Clément, 60280 Venette (FR); PUTHUSSERY, James, WI 53226 Wauwatosa (US)
(74) Representative: Arkema Patent

(57) **Abstract**

The invention relates to a hot melt adhesive composition comprising: a first non-amorphous single-site catalyzed polyolefin (PO1), a second non-amorphous single-site catalyzed polyolefin (PO2) having a number average molecular weight higher than PO1, an amorphous poly(alpha-olefin) and a wax.

The invention also relates to the use of the hot melt adhesive composition according to the invention.

Furthermore, the invention relates to a method for bonding substrates implementing the hot melt adhesive composition according to the invention.

Finally, the invention relates to an article comprising the hot melt adhesive composition according to the invention.

## Description

### TECHNICAL FIELD

The present invention relates to a hot melt adhesive composition and its uses, a method for bonding substrates and an article.

### TECHNICAL BACKGROUND

Hot melt adhesives (HM adhesives) are substances which are solid at room temperature and which generally comprise neither water nor solvent. They are applied in the molten state after heating to a temperature most often comprised between 130°C and 180°C, and solidify during cooling, thus forming a seal (or adhesive joint) which ensures the attachment of the substrates to be assembled.

Hot melt adhesives are widely used in various applications, in particular in nonwoven applications, such as disposable hygiene and medical products. These products generally aim at receiving and containing body fluids and are usually in contact or in close proximity to the skin.

After aging (e.g. after a long-term storage or transportation), the adhesiveness of hot melt adhesives usually decreases significantly, meaning that the adhesion between the substrates (bonded with HM adhesives) may not be maintained, causing the products themselves to collapse. This aged adhesion is even worse when the HM adhesives come into contact with moisture or liquid, such as body fluids, which is very common for disposable hygiene and medical products.

Therefore, the present invention aims at providing a hot melt adhesive composition which would keep a good adhesion after aging, in particular in wet conditions, especially in nonwoven material-based products.

### SUMMARY OF THE INVENTION

The invention relates to a hot melt adhesive composition comprising: a first non-amorphous single-site catalyzed polyolefin (PO1), a second non-amorphous single-site catalyzed polyolefin (PO2) having a number average molecular weight higher than PO1, an amorphous poly(alpha-olefin) and a wax.

The invention also relates to the use of the hot melt adhesive composition according to the invention as an adhesive for bonding two substrates together, or as a coating on the surface of a substrate.

Furthermore, the invention relates to a method for bonding substrates comprising:
- heating the hot melt adhesive composition according to the invention, e.g. at a temperature comprised between 130°C and 180°C, for at least a period of time long enough to render said composition liquid enough to be applied on a substrate (for example at least two hours), then
- coating said composition on a surface of a first substrate, then
- contacting the coated surface of the first substrate with a surface of a second substrate, so as to form an adhesive joint bonding the two substrates.

Finally, the invention relates to an article comprising the hot melt adhesive composition according to the invention.

The present invention makes it possible to address the needs mentioned above. In particular, the hot melt adhesive composition according to the invention surprisingly makes it possible to significantly improve both the dry and the wet peel strength after aging, while having an appropriate initial dry and wet peel strength.

Therefore, the present invention makes it possible to provide a hot melt adhesive composition having a good adhesiveness (in particular in a wet state), even after a long period of aging. The articles comprising said composition may thus experience a long-term storage or transportation while keeping their performance.

### DESCRIPTION OF THE INVENTION

### Hot melt adhesive composition

The term "hot melt" is used herein to describe that the adhesive composition is solid at ambient temperature (e.g. 18°C to 25°C) and requires to be heated to melt and then be applied on a substrate. The adhesive composition according to the invention is generally in a molten state at a temperature of at least 115°C, preferably at least 130°C.

The hot melt adhesive composition according to the invention comprises non-amorphous single-site catalyzed polyolefins, i.e. polyolefins obtained by single-site catalysis polymerization. Single-site catalysis has been widely used on industrial scale. Each catalyst molecule has only a single active transition metal site and the activity at this metal site is therefore identical for all the catalyst molecules. The single-site catalyst may be a metallocene catalyst and/or a non-metallocene catalyst.

Preferably, the non-amorphous single-site catalyzed polyolefins are non-amorphous metallocene-catalyzed polyolefins. The catalyst is typically a transition metal complex having a metal atom situated between one or two cyclic organic ligands; the ligands being the same or different derivatives of cyclopentadiene. A co-catalyst may be implemented to activate a metallocene catalyst by converting a metallocene complex to a catalytically active species and an example of such compound is aluminoxane preferably methylaluminoxane having an average degree of oligomerization of from 4 - 30. Nonetheless, other neutral or ionic co-catalysts can be used, for example organic boron compounds such as tetra(n-butyl)ammonium tetrakis(pentafluorophenyl) borate, dimethylanilinium tetrakis(pentafluorophenyl) borate and/or trityl tetrakis(pentafluorophenyl) borate.

As an example of a non-metallocene catalyst, mention may be made of a catalytic metal (preferably a transition metal) complexed with a polydentate organic ligand, such as described in WO2017/058981, for example:

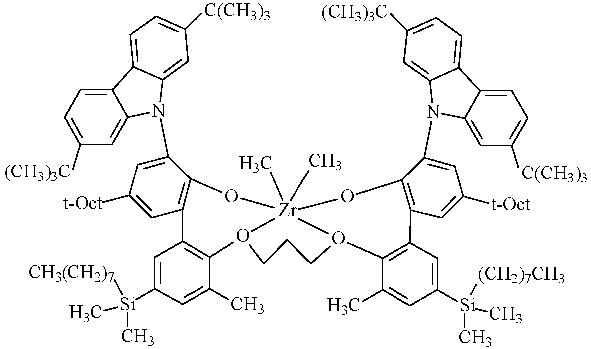

The PO1 and PO2 are non-amorphous because they show a melting point on their DSC (Differential Scanning Calorimetry) curve, generally associated with an enthalpy of fusion of at least 8 J/g.

In the present text, the melting point and enthalpy of fusion (also called heat of fusion or melt enthalpy) can be determined by DSC. Preferably, the DSC conditions are as follows: about 10 mg of sample are first heated from -70°C to 200°C at 10°C/min, then cooled to -70°C at 10°C/min, wait 5 min at -70°C and heat a second time from -70°C to 200°C at 10°C/min; the melting point and enthalpy of fusion being determined on the second heating run.

### First non-amorphous single-site catalyzed polyolefin (PO1)

The hot melt adhesive composition according to the invention comprises a first non-amorphous single-site catalyzed polyolefin (PO1), preferably metallocene-catalyzed.

As used herein, the word "a" or "an" means one or more.

The PO1 may be a homopolymer or a copolymer, preferably a copolymer.

By "copolymer", it is intended a polymer comprising at least two different repeating units.

The PO1 may be obtained by polymerizing one or more alpha-olefin monomers.

In the present text, "alpha-olefin" designates an alkene of formula CₙH₂ₙ (n corresponding to the number of carbon atoms), which has a carbon-carbon double bond at the first carbon atom (alpha-carbon).

For example, the alpha-olefin monomer may be ethylene, propylene, 1-butene, 2-methyl-1-propene (isobutylene), 1-pentene, 3-methyl-1-butene, 3-methyl-1-pentene, 1-hexene, 1-heptene and/or 1-octene.

Preferably, the PO1 is a homopolymer or copolymer of propylene, more preferably a copolymer of propylene. For example, the PO1 may comprise more than 60 % by weight of propylene units with respect to the weight of the PO1, preferably more than 70 % by weight, more preferably more than 80 % by weight, even more preferably more than 85 % by weight.

When the PO1 is a copolymer of propylene, the other monomer(s) constituting said copolymer may be selected from ethylene, 1-butene, 2-methyl-1-propene, 1-pentene, 3-methyl-1-butene, 3-methyl-1-pentene, 1-hexene, 1-heptene, 1-octene, and mixtures thereof. Preferably, at least one of the other monomer(s) is ethylene, more preferably the other monomer is only ethylene. For example, the PO1 may comprise between 1 % and 40 % by weight of ethylene units with respect to the weight of the PO1, preferably between 2 % and 30 % by weight, more preferably between 4 % and 20 % by weight, even more preferably between 6 % and 15 % by weight.

In the present text, the weight percentages of the monomer units (e.g. propylene, ethylene, etc.) constituting a polymer can be determined by the skilled person, for example by ¹H NMR (Nuclear Magnetic Resonance).

According to a preferred embodiment, the PO1 is a copolymer of ethylene and propylene comprising more than 60 % by weight of propylene units and between 1 % and 40 % by weight of ethylene units with respect to the weight of the PO1, preferably more than 70 % by weight of propylene units and between 2 % and 30 % by weight of ethylene units, more preferably more than 80 % by weight of propylene units and between 4 % and 20 % by weight of ethylene units, even more preferably more than 85 % by weight of propylene units and between 6 % and 15 % by weight of ethylene units.

The PO1 may have a weight average molecular weight comprised between 5000 g/mol and 90000 g/mol, preferably between 20000 g/mol and 75000 g/mol, more preferably between 30000 g/mol and 50000 g/mol.

The PO1 may have a number average molecular weight comprised between 2000 g/mol and 40000 g/mol, preferably between 7000 g/mol and 30000 g/mol, more preferably between 11000 g/mol and 20000 g/mol.

The weight and number average molecular weight may be measured by size exclusion chromatography (SEC), for example with a polystyrene calibration. For example, 1,2,4 trichlorobenzene can be used as the eluent, the temperature can be about 170°C, and the chromatography can be equipped with a differential refractive index detector (DRI) and an online light scattering (LS) detector.

The polydispersity index of the PO1 may be comprised between 1 and 4, preferably between 2 and 3. The polydispersity index corresponds to the weight average molecular weight divided by the number average molecular weight.

The PO1 may have an enthalpy of fusion comprised between 8 J/g and 40 J/g, preferably between 11 J/g and 30 J/g, more preferably between 15 J/g and 25 J/g.

The PO1 may have a melting point comprised between 30°C and 170°C, preferably between 60°C and 150°C, more preferably between 80°C and 120°C.

The PO1 may have a viscosity at 190°C between 1000 mPa.s and 15000 mPa.s, preferably between 3000 mPa.s and 12000 mPa.s, more preferably between 5000 mPa.s and 9000 mPa.s. The viscosity may be measured according to ASTM D3236, in particular with a Brookfield apparatus.

Unless otherwise stated, standards mentioned throughout the present application are those in effect on the date the application is filed.

The PO1 content in the hot melt adhesive composition according to the invention may be comprised between 10 % and 50 % by weight with respect to the total weight of the hot melt adhesive composition, preferably between 15 % and 40 % by weight, more preferably between 20 % and 30 % by weight.

In the context of the invention, the ranges of values are understood to be inclusive. For example, the range "between 0% and 25%" includes, in particular, the values 0% and 25%.

### Second non-amorphous single-site catalyzed polyolefin (PO2)

The hot melt adhesive composition according to the invention comprises a second non-amorphous single-site catalyzed polyolefin (PO2), preferably metallocene-catalyzed.

The PO2 may be a homopolymer or a copolymer, preferably a copolymer.

The PO2 may be obtained by polymerizing one or more alpha-olefin monomers, for example, ethylene, propylene, 1-butene, 2-methyl-1-propene, 1-pentene, 3-methyl-1-butene, 3-methyl-1-pentene, 1-hexene, 1-heptene and/or 1-octene.

Preferably, the PO2 is a homopolymer or copolymer of propylene, more preferably a copolymer of propylene. For example, the PO2 may comprise more than 60 % by weight of propylene units with respect to the weight of the PO2, preferably more than 70 % by weight, more preferably more than 80 % by weight, even more preferably more than 85 % by weight.

When the PO2 is a copolymer of propylene, the other monomer(s) constituting said copolymer may be selected from ethylene, 1-butene, 2-methyl-1-propene, 1-pentene, 3-methyl-1-butene, 3-methyl-1-pentene, 1-hexene, 1-heptene, 1-octene, and mixtures thereof. Preferably, at least one of the other monomer(s) is ethylene, more preferably the other monomer is only ethylene. For example, the PO2 may comprise between 1 % and 40 % by weight of ethylene units with respect to the weight of the PO2, preferably between 2 % and 30 % by weight, more preferably between 4 % and 20 % by weight, even more preferably between 6 % and 15 % by weight.

According to a preferred embodiment, the PO2 is a copolymer of ethylene and propylene comprising more than 60 % by weight of propylene units and between 1 % and 40 % by weight of ethylene units with respect to the weight of the PO2, preferably more than 70 % by weight of propylene units and between 2 % and 30 % by weight of ethylene units, more preferably more than 80 % by weight of propylene units and between 4 % and 20 % by weight of ethylene units, even more preferably more than 85 % by weight of propylene units and between 6 % and 15 % by weight of ethylene units.

The number average molecular weight of the PO2 may be at least 1.5 times higher than the number average molecular weight of the PO1, preferably at least 2 times higher, more preferably at least 2.5 times higher. For example, the number average molecular weight of the PO2 may be between 1.5 times and 5 times higher than the number average molecular weight of the PO1, preferably between 2 times and 4 times higher, more preferably between 2.5 times and 3 times higher.

The PO2 may have a weight average molecular weight comprised between 90000 g/mol and 600000 g/mol, preferably between 100000 g/mol and 300000 g/mol, more preferably between 105000 g/mol and 130000 g/mol.

The PO2 may have a number average molecular weight comprised between 20000 g/mol and 300000 g/mol, preferably between 30000 g/mol and 150000 g/mol, more preferably between 40000 g/mol and 70000 g/mol.

The weight and number average molecular weight may be measured by size exclusion chromatography (SEC), for example with a polystyrene calibration. For example, 1,2,4 trichlorobenzene can be used as the eluent, and the temperature can be about 170°C, and the chromatograph can be equipped with a differential refractive index detector (DRI) and an online light scattering (LS) detector.

The polydispersity index of the PO2 may be comprised between 1 and 4, preferably between 2 and 3. The polydispersity index corresponds to the weight average molecular weight divided by the number average molecular weight.

The PO2 may have an enthalpy of fusion comprised between 8 J/g and 40 J/g, preferably between 8 J/g and 20 J/g, more preferably between 8 J/g and 15 J/g.

The PO2 may have a melting point comprised between 30°C and 170°C, preferably between 40°C and 100°C, more preferably between 50°C and 70°C.

The PO2 may have a melt index at 190°C and 2.16 kg between 1 g/10 min and 50 g/10 min, preferably between 5 g/10 min and 40 g/10 min, more preferably between 8 g/10 min and 30 g/10 min. The melt index may be measured according to ASTM D1238.

The PO2 content in the hot melt adhesive composition according to the invention may be comprised between 0.2 % and 20 % by weight with respect to the total weight of the hot melt adhesive composition, preferably between 0.5 % and 10 % by weight, more preferably between 1.0 % and 3 % by weight.

The weight ratio PO1/PO2 may be comprised between 2 and 50, preferably between 5 and 30, more preferably between 8 and 18.

### Amorphous poly(alpha-olefin)

The amorphous poly(alpha-olefin) is not a single-site catalyzed polyolefin (i.e. is not obtained by single-site catalysis). The amorphous poly(alpha-olefin) may be obtained by a Ziegler-Natta polymerization process (for example with a pair of catalyst and co-catalyst such as TiCl₃ and Al(C₂H₅)₂Cl, or TiCl₄ with Al(C₂H₅)₃).

The amorphous poly(alpha-olefin) may be completely amorphous (showing no melting peaks on a DSC curve) or have a low level of crystallinity (showing a small melting peak on a DSC curve). Preferably, the amorphous poly(alpha-olefin) has an enthalpy of fusion of less than 8 J/g (when the poly(alpha-olefin) is completely amorphous, it is considered that its enthalpy of fusion is equal to 0 J/g).

The amorphous poly(alpha-olefin) may be a homopolymer or a copolymer, preferably a copolymer.

The amorphous poly(alpha-olefin) may be obtained by polymerizing one or more alpha-olefin monomers, for example ethylene, propylene, 1-butene, 2-methyl-1-propene, 1-pentene, 3-methyl-1-butene, 3-methyl-1-pentene, 1-hexene, 1-heptene and/or 1-octene.

Advantageously, the amorphous poly(alpha-olefin) is a homopolymer or copolymer of ethylene, propylene and/or 1-butene, preferably a copolymer of ethylene, propylene and/or 1-butene, more preferably a copolymer of ethylene, propylene and 1-butene.

The amorphous poly(alpha-olefin) may have a weight average molecular weight comprised between 5000 g/mol and 90000 g/mol, preferably between 20000 g/mol and 75000 g/mol, more preferably between 30000 g/mol and 60000 g/mol.

The amorphous poly(alpha-olefin) may have a number average molecular weight comprised between 3000 g/mol and 60000 g/mol, preferably between 5000 g/mol and 30000 g/mol, more preferably between 8000 g/mol and 15000 g/mol.

The weight and number average molecular weight may be measured by size exclusion chromatography (SEC), for example with a polystyrene calibration.

The amorphous poly(alpha-olefin) may have a softening point comprised between 50°C and 180°C, preferably between 60°C and 120°C. The softening point may be measured by a ring and ball method, for example according to DIN 52 011.

The amorphous poly(alpha-olefin) may have a viscosity at 190°C between 1000 mPa.s and 20000 mPa.s, preferably between 4000 mPa.s and 12000 mPa.s. The viscosity may be measured according to DIN 53019, in particular with a Brookfield apparatus.

The amorphous poly(alpha-olefin) content in the hot melt adhesive composition according to the invention may be comprised between 5 % and 50 % by weight with respect to the total weight of the hot melt adhesive composition, preferably between 10 % and 30 % by weight, more preferably between 12 % and 24 % by weight.

### Wax

The wax may be a paraffin wax, a Fischer-Tropsch wax, a polyolefin wax, an EVA wax and/or a natural wax (such as carnauba wax, rice wax, beeswax, etc.), preferably a paraffin wax and/or a Fischer-Tropsch wax, more preferably a Fischer-Tropsch wax.

By "paraffin wax", it is intended a wax derived from crude oil. It generally consists of a complex mixture of hydrocarbons. Paraffin waxes often contain a majority of straight-chain hydrocarbons, and can also contain branched hydrocarbons such as isoparaffins and other branched materials, and cycloalkanes such as cycloparaffins and other cyclocontaining materials. Paraffin waxes are characterized by a clearly defined crystal structure.

By "Fischer-Tropsch wax", it is intended a wax obtained by the so-called Fischer-Tropsch process. The Fischer-Tropsch process includes converting a synthesis gas comprising mainly hydrogen and carbon monoxide to hydrocarbons. The conversion is effected by contacting the synthesis gas with a Fischer-Tropsch catalyst, usually an iron or cobalt based catalyst, in a fixed bed or a slurry bed reactor under either low or high temperature Fischer-Tropsch operating conditions. In this manner, a mixture of hydrocarbons having different boiling ranges is obtained. The Fischer-Tropsch wax is then recovered, e.g. by means of distillation, from this hydrocarbon mixture. The Fischer-Tropsch wax typically has a composition wherein about 80% by volume thereof has a boiling point higher than 550°C atmospheric equivalent temperature ("AET").

By "polyolefin wax", it is intended a polyolefin homopolymer or copolymer wax, preferably polyethylene and/or polypropylene polymer wax. The polyolefin wax generally has a number average molecular weight up to 10000 g/mol. The number average molecular weight can be measured by size exclusion chromatography (or SEC), preferably with a polystyrene calibration. As examples of commercially available polyolefin waxes, mention may be made of "A-C^{®}" waxes sold by Honeywell.

By "EVA wax", it is intended oligomeric polymer compounds that are prepared via a process comprising the co-polymerization of ethylene and vinyl acetate monomers and that have the following properties: (a) solid at room temperature (e.g. 23°C); (b) low melting point (e.g. less than 100°C); and (c) insoluble in water. The EVA copolymers of the EVA wax may be functionalized or modified in any possible manner.

The wax may be acid-modified, but is preferably non-acid modified. By "acid-modified", it is intended comprising at least one carboxylic acid group (-C(O)OH) and/or carboxylic anhydride group.

The wax may have a congealing point comprised between 40°C and 160°C, preferably between 80°C and 120°C. The congealing point may be measured according to ASTM D938.

The wax may have a drop melting point comprised between 50°C and 170°C, preferably between 90°C and 130°C. The drop melting point may be measured according to ASTM D127.

The wax may have a kinematic viscosity at 130°C of less than 500 mm²/s, preferably less than 100 mm²/s, more preferably less than 50 mm²/s. Such kinematic viscosity may be measured according to ASTM D445.

The wax content in the hot melt adhesive composition according to the invention may be comprised between 1 % and 15 % by weight with respect to the total weight of the hot melt adhesive composition, preferably between 2 % and 10 % by weight, more preferably between 2 % and 8 % by weight.

### Tackifying resin

Advantageously, the hot melt adhesive composition according to the invention further comprises a tackifying resin.

The tackifying resin may be selected from:
- natural and modified rosin, such as gum rosin, wood rosin, tall-oil rosin, distilled rosin, hydrogenated rosin, dimerized rosin, polymerized rosin,
- esters of natural and modified rosins, in particular glycerol and pentaerythritol esters, such as glycerol esters of pale wood rosin, glycerol esters of polymerized rosin, pentaerythritol esters of pale wood rosin, pentaerythritol esters of tall oil rosin, phenolic modified pentaerythritol esters of rosin,
- polyterpene resins, generally resulting from the polymerization of terpene hydrocarbons, such as the monoterpene known as pinene, in the presence of Friedel-Crafts catalysts preferably at moderately low temperatures (e.g. about 20°C-50°C),
- copolymers of terpene with a diene monomer, preferably an aromatic diene monomer such as a styrene monomer (e.g. styrene, methylstyrene, etc),
- phenolic-modified terpene resins, such as those resulting from the condensation, in an acidic medium, of a terpene and a phenol,
- aliphatic petroleum hydrocarbon resins (C5), resulting from the polymerization of C5-hydrocarbon monomers,
- aromatic petroleum hydrocarbon resins (C9), resulting from the polymerization of C9-hydrocarbon monomers,
- petroleum hydrocarbon resins (C5/C9), resulting from the polymerization of a blend of aliphatic C5- and aromatic C9-hydrocarbon monomers,
- dicyclopentadiene petroleum resins (DCPD), resulting from the polymerization of dicyclopentadiene monomers optionally in mixture with aromatic C9-hydrocarbon monomers and/or aliphatic C5-hydrocarbon monomers,
- their corresponding hydrogenated derivatives (resulting from a subsequent total or partial hydrogenation thereof), and
- mixtures thereof.

As examples of C5-hydrocarbon monomers useful to prepare the aliphatic petroleum C5-hydrocarbon resin or the petroleum C5/C9-hydrocarbon resin, mention may be made of trans-1,3-pentadiene, cis-1,3-pentadiene, 2-methyl-2-butene, cyclopentadiene, methylcyclopentadiene and/or cyclopentene.

As examples of C9-hydrocarbon monomers useful to prepare the aromatic petroleum C9-hydrocarbon resin, the petroleum C5/C9-hydrocarbon resin or the DCPD resin, mention may be made of vinyltoluene, indene, methylstyrene, α-methylstyrene, styrene and/or methylindene.

Preferably, the tackifying resin is selected from:
- aliphatic petroleum hydrocarbon resins (C5), resulting from the polymerization of C5-hydrocarbon monomers,
- aromatic petroleum hydrocarbon resins (C9), resulting from the polymerization of C9-hydrocarbon monomers,
- petroleum hydrocarbon resins (C5/C9), resulting from the polymerization of a blend of aliphatic C5- and aromatic C9-hydrocarbon monomers,
- dicyclopentadiene petroleum resins (DCPD), resulting from the polymerization of dicyclopentadiene monomers optionally in mixture with aromatic C9-hydrocarbon monomers and/or aliphatic C5-hydrocarbon monomers,
- their corresponding hydrogenated derivatives (resulting from a subsequent total or partial hydrogenation thereof), and
- mixtures thereof.

More preferably, the tackifying resin is selected from:
- aliphatic petroleum hydrocarbon resins (C5), resulting from the polymerization of C5-hydrocarbon monomers,
- dicyclopentadiene petroleum resins (DCPD), resulting from the polymerization of dicyclopentadiene monomers optionally in mixture with aliphatic C5-hydrocarbon monomers,
- their corresponding hydrogenated derivatives (resulting from a subsequent total or partial hydrogenation thereof), and
- mixtures thereof.

According to a preferred embodiment, the tackifying resin is hydrogenated (totally or partially).

The tackifying resin may have a softening point comprised between 20°C and 140°C, preferably between 85°C and 130°C. The softening point can be measured by a ring and ball method, for example according to ASTM E28.

The total content of the tackifying resin in the hot melt adhesive composition according to the invention may be comprised between 10 % and 60 % by weight with respect to the total weight of said composition, preferably between 20 % and 55 % by weight, more preferably between 30 % and 50 % by weight.

### Plasticizer

Advantageously, the hot melt adhesive composition according to the invention further comprises a plasticizer.

The plasticizer may be selected from naphthenic oils, paraffinic oils, olefin plasticizers, and mixtures thereof, preferably from naphthenic oils, paraffinic oils, and mixtures thereof.

Naphthenic and paraffinic oils are petroleum based oils which consists in a mixture of naphthenic hydrocarbons (e.g. aliphatic, saturated or unsaturated, C4 to C7-member hydrocarbon rings, preferably aliphatic, saturated or unsaturated, C4 to C6-member rings, including cycloalkanes such as cyclopentane, cyclohexane, cycloheptane), paraffinic hydrocarbons (saturated, linear or branched, alkanes) and aromatic hydrocarbons (aromatic hydrocarbon rings, which may be monocyclic or polycyclic; preferably aromatic C6-member hydrocarbon rings).

The classification of naphthenic and paraffinic oil is made based on the amount of each type of hydrocarbons in the oil. Typically, paraffinic oils have a paraffinic hydrocarbon content of at least 50% by weight with respect to the total weight of the paraffinic oil, and naphthenic oils have a naphthenic hydrocarbon content between 30% and 40% by weight, with respect to the total weight of the naphthenic oil.

By "olefin plasticizers", it is intended polyolefins having a viscosity at 190°C of less than 300 mPa.s, preferably less than 150 mPa.s. The viscosity may be measured according to DIN 53 019, in particular with a Brookfield apparatus.

Olefin plasticizers generally have a low weight average molecular weight, preferably between about 100 g/mol and about 10000 g/mol. The weight average molecular weight can be measured as indicated above (by size exclusion chromatography, preferably with a polystyrene calibration).

In the present text, by "about X", it is intended more or less 10% the value of X.

As examples of olefin plasticizers, mention may be made of Licocene^{®} PPA 330 (by Clariant), Indopol^{®} H300 (by INEOS), Glissopal^{®} V640 (by BASF), PB1300 (by DAELIM).

The total content of the plasticizer in the hot melt adhesive composition according to the invention may be comprised between 5 % and 30 % by weight with respect to the total weight of said composition, preferably between 8 % and 15 % by weight.

### Other additives

The hot melt adhesive composition according to the invention may further comprise one or more additives selected from ultraviolet (UV) stabilizers (or antioxidants), fillers, pigments, fluorescent agents, and mixtures thereof, in particular from UV stabilizers.

The total content of additives in the composition according to the invention may be up to 25 % by weight with respect to the total weight of the composition, preferably between 0.1 % and 15 % by weight.

Advantageously, the hot melt adhesive composition according to the invention further comprises a UV stabilizer (or antioxidant). UV stabilizers are typically introduced to protect the composition from degradation resulting from reaction with oxygen which is likely to be formed by the action of heat or light. These compounds may include antioxidants capable of scavenging free radicals.

Examples of UV stabilizers are benzotriazoles, benzophenones, hindered amines (also named HALS for "hindered amine light stabilizers"), hindered phenols and multifunction phenols (such as sulfur and phosphorous-containing phenols and derivatives thereof), preferably hindered phenols.

Representative hindered amines include bis(1-octyloxy-2,2,6,6-tetramethyl-4-piperidyl)sebacate, bis(2,2,6,6-tetramethyl-4-piperidyl)sebacate, bis(1,2,2,6,6-pentamethyl-4-piperidyl)sebacate (CAS: 41556-26-7), methyl 1,2,2,6,6-pentamethyl-4-piperidyl sebacate (CAS: 82919-37-7) and/or or 4,4'-bis(α,α-dimethylbenzyl)diphenylamine.

Hindered phenols are well known to those skilled in the art and may be characterized as phenolic compounds that also contain sterically bulky radicals in close proximity to the phenolic hydroxyl group thereof. In particular, tertiary butyl groups generally are substituted onto the benzene ring in at least one of the ortho positions relative to the phenolic hydroxyl group. Representative hindered phenols and multifunction phenols include: 1,3,5-trimethyl-2,4,6-tris(3-5-di-tert-butyl-4-hydroxybenzyl) benzene, pentaerythritol tetrakis[3-(3,5-di-tert-butyl-4-hydroxyphenyl)propionate], n-octadecyl-3(3,5-di-tert-butyl-4-hydroxyphenyl) propionate, 4.4'-methylenebis(4-methyl-6-tert-butylphenol), 4,4'-thiobis(6-tert-butyl-o-cresol), 2,6-di-tert-butylphenol, 6-(4-hydroxyphenoxy)-2,4-bis(n-octylthio)-1,3,5-triazine, 2,3,6-tris(4-hydroxy-3,5-di-tert-butyl-phenoxy)-1,3,5-triazine, di-n-octadecyl-3,5-di-tert-butyl-4-hydroxybenzyl-phosphonate, 2-(n-octyl-thio)ethyl-3,5-di-tert-butyl-4-hydroxybenzoate, sorbitol hexa-3(3,5-di-tert-butyl-4-hydroxy-phenyl)propionate, 2,2'-methylene bis(4-methyl-6-tert-butylphenol)phosphites, tris-(p-nonylphenyl)-phosphite (TNPP), bis(2,4-di-tert-butylphenyl)4,4'-diphenylenediphosphonite, tris(2,4-di-tert-butylphenyl) phosphite and/or tris(2,4-di-tert-butylphenyl)phosphate.

The UV stabilizer (or antioxidant) content may be between 0.1 % and 5 % by weight with respect to the total weight of the hot melt adhesive composition according to the invention, preferably between 0.3 % and 3 % by weight.

The hot melt adhesive composition according to the invention may further comprise a filler. Typical fillers include talc, calcium carbonate, clay, silica, mica, wollastonite, feldspar, aluminum silicate, alumina, hydrated alumina, glass microspheres, ceramic microspheres and/or thermoplastic microspheres.

The filler content may be up to 10 % by weight with respect to the total weight of the hot melt adhesive composition according to the invention, preferably up to 5 % by weight.

The hot melt adhesive composition according to the invention may further comprise a pigment. The pigment may be an organic and/or inorganic pigment, for example titanium dioxide.

The pigment content may be up to 5 % by weight with respect to the total weight of the hot melt adhesive composition according to the invention, preferably up to 3 % by weight.

The hot melt adhesive composition according to the invention may further comprise a fluorescent agent such as 2-(6-hydroxy-3-oxo-(3H)-xanthen-9-yl) benzoic acid, disodium 6-hydroxy-3-oxo-9-xanthene-o-benzoate and/or 8-hydroxy-1,3,6-pyrenetrisulfonic acid trisodium salt.

The content of fluorescent agent may be up to 3 % by weight with respect to the total weight of the hot melt adhesive composition according to the invention, preferably up to 1 % by weight.

### Other features of the hot melt adhesive composition according to the invention

Advantageously, the hot melt adhesive composition according to the invention comprises less than 5 % by weight of an acid-modified ingredient with respect to the total weight of said composition, preferably less than 1 % by weight. For example, the acid-modified ingredient may be an acid-modified wax, an acid-modified tackifying resin, an acid-modified plasticizer, an acid-modified polyolefin and/or an acid-modified rubber. By "acid modified", it is intended modified to introduce at least one carboxylic acid group (-COOH) and/or carboxylic anhydride group.

One or more of the ingredients comprised in the hot melt adhesive composition according to the invention may be recycled materials and/or biobased materials. In particular, the polyolefins (especially the PO1, the PO2 and/or the amorphous poly(alpha-olefin)) may be recycled materials and/or the tackifying resin may be biobased. By "biobased", it is intended materials that are obtained from biological resources (e.g. plants, microorganisms, animals, etc.) and may have undergone chemical modifications.

According to an embodiment, the hot melt adhesive composition according to the invention comprises:
- between 10% and 50% by weight of a first non-amorphous single-site catalyzed polyolefin (PO1), the PO1 having preferably a number average molecular weight comprised between 2000 g/mol and 40000 g/mol,
- between 0.2 % and 20 % by weight of a second non-amorphous single-site catalyzed polyolefin (PO2), the PO2 having preferably a number average molecular weight comprised between 20000 g/mol and 300000 g/mol,
- between 5 % and 50 % by weight of an amorphous poly(alpha-olefin),
- between 1 % and 15 % by weight of a wax, the wax being preferably a paraffin wax and/or a Fischer-Tropsch wax,
- preferably between 10 % and 60 % by weight of a tackifying resin,
- optionally between 5 % and 30 % by weight of a plasticizer, preferably selected from naphthenic oils, paraffinic oils, and mixtures thereof, and
- optionally up to 25 % by weight of one or more additives selected from UV stabilizers (or antioxidants), fillers, pigments, fluorescent agents, and mixtures thereof,

the weight percentages being with respect to the total weight of the hot melt adhesive composition, and
the number average molecular weight of the PO2 being at least 1.5 times higher than the number average molecular weight of the PO1.

Preferably, the hot melt adhesive composition according to the invention consists essentially of the ingredients mentioned above. By "consists essentially", it is intended that said composition comprises less than 5 % by weight of ingredients other than the aforementioned ingredients, relative to the total weight of said composition, preferably less than 2% by weight, even more preferably less than 1% by weight.

The ingredients of this embodiment and their particular contents are as described above, including the embodiments and preferred features.

In particular, the hot melt adhesive composition according to the invention comprises:
- between 20 % and 30 % by weight of a first non-amorphous single-site catalyzed polyolefin (PO1), the PO1 having preferably a number average molecular weight comprised between 11000 g/mol and 20000 g/mol,
- between 1.0 % and 3 % by weight of a second non-amorphous single-site catalyzed polyolefin (PO2), the PO2 having preferably a number average molecular weight comprised between 40000 g/mol and 70000 g/mol,
- between 12 % and 24 % by weight of an amorphous poly(alpha-olefin), the amorphous poly(alpha-olefin) preferably having a viscosity at 190°C between 1000 mPa.s and 20000 mPa.s,
- between 2 % and 5 % by weight of a wax, the wax being preferably a Fischer-Tropsch wax,
- between 30 % and 50 % by weight of a tackifying resin,
- optionally between 8 % and 15 % by weight of a plasticizer, preferably selected from naphthenic oils, paraffinic oils, and mixtures thereof, and
- optionally between 0.1 % and 20 % by weight of one or more additives selected from UV stabilizers (or antioxidants), fillers, pigments, fluorescent agents, and mixtures thereof,

the weight percentages being with respect to the total weight of the hot melt adhesive composition, and
the number average molecular weight of the PO2 being between 1.5 times and 5 times higher than the number average molecular weight of the PO1.

Preferably, the hot melt adhesive composition according to the invention consists essentially of the ingredients mentioned above.

The ingredients of this embodiment and their particular contents are as described above, including the embodiments and preferred features.

Advantageously, the hot melt adhesive composition according to the invention has a dry peel strength after aging and a wet peel strength after aging of at least 1.0 N/25.4 mm. The dry and a wet peel strengths after aging may be measured for a nonwoven/polyethylene laminated specimen stored for 2 weeks at about 55°C and 50% RH, for example as described in Example 1.

The hot melt adhesive composition according to the invention can be prepared by mixing its ingredients under heat, preferably at a temperature ranging from 140°C to 180°C and atmospheric pressure. An example of preparation is described in Example 2.

### Use of the hot melt adhesive composition

The invention also relates to the use of the hot melt adhesive composition according to the invention as an adhesive for bonding two substrates together, or as a coating on the surface of a substrate.

The substrates to be bonded may be different or of same nature, with various forms. Preferably, the substrates are each a layer (or film), strands or fluff.

Preferably, each substrate may be chosen independently from one another among nonwoven fabric (preferably hydrophilic), tissue, absorbent fluff, super absorbent polymer (SAP), composite material, plastics which may be elastomeric or non-elastomeric (for example styrene block copolymers, polyurethanes and/or polyolefins), and any mixture thereof.

According to a preferred embodiment, at least one of the substrates to be bonded is a nonwoven fabric (preferably hydrophilic). Preferably, the other substrate is a plastic, in particular a polyolefin (e.g. polypropylene, polyethylene).

The surface to be coated may comprise nonwoven fabric (preferably hydrophilic), tissue, absorbent fluff, super absorbent polymer, composite material, plastics which may be elastomeric or non-elastomeric (for example styrene block copolymers, polyurethanes and/or polyolefins), and any mixture thereof. Preferably, the surface to be coated comprises a nonwoven fabric (preferably hydrophilic), polypropylene, polyethylene, polyethylene terephthalate, cotton, bamboo, silk and/or polylactic acid, in particular a nonwoven fabric.

### Method for bonding substrates

Furthermore, the invention relates to a method for bonding substrates comprising:
- heating the hot melt adhesive composition according to the invention, e.g. at a temperature comprised between 130°C and 180°C, for at least a period of time long enough to render said composition liquid enough to be applied on a substrate (for example at least two hours), then
- coating said composition on a surface of a first substrate, then
- contacting the coated surface of the first substrate with a surface of a second substrate, so as to form an adhesive joint bonding the two substrates.

Preferably, the bonded substrates form an assembly product (or laminate).

The substrates implemented in said method may be different or of same nature, with various forms. Preferably, the substrates are each a layer (or film), strands or fluff.

The substrates to be implemented are varied. Preferably, each substrate is selected independently from one another among nonwoven fabric (preferably hydrophilic), tissue, absorbent fluff, super absorbent polymer (SAP), composite material, plastics which may be elastomeric or non-elastomeric (for example styrene block copolymers, polyurethanes and/or polyolefins), and any mixture thereof.

According to a preferred embodiment, at least one of the substrates is a nonwoven fabric (preferably hydrophilic). Preferably, the other substrate is a plastic, in particular a polyolefin (e.g. polypropylene, polyethylene).

The hot melt adhesive composition according to the invention may be coated or applied with a variety of application techniques known in the art, which include contact type application (such as slot die coating) and non-contact type application (such as spraying or fiberization), preferably contact type application.

The amount of coated hot melt adhesive composition by surface unit can vary in a very large range, for example from 0.1 to 50 g/m², depending on the substrates implemented.

Preferably, the method for bonding substrates according to the invention further comprises a cooling step after the contacting step, preferably at room temperature (e.g. 18-25°C), in order to solidify the hot melt adhesive composition.

### Article

Finally, the invention relates to an article comprising the hot melt adhesive composition according to the invention.

According to a preferred embodiment, said composition bonds at least two substrates of the article according to the invention (preferably, an assembly product). The at least two substrates may be joined adhesively by a layer of the hot melt adhesive composition according to the invention, in sandwich between the two substrates, and/or by spots of the hot melt adhesive composition according to the invention.

The article may be obtained thanks to the method for bonding substrates according to the invention.

The substrates are preferably as described above for the method for bonding substrates according to the invention (including the embodiments and preferred features), in particular at least one of the substrates is a nonwoven fabric (preferably hydrophilic).

The article may be a disposable diaper, disposable training pants, a feminine sanitary napkin or pad, a disposable adult incontinent pad or brief, an absorbent pad, a surgical sheet, a surgical mask, toilet tissues, paper towels or wipes.

According to another embodiment, the article is a multilayer system comprising:
- an adhesive layer consisting of the hot-melt composition according to the invention,
- a support layer adjacent to the adhesive layer, and
- a protective layer adjacent to the adhesive layer.

The support layer is preferably a substrate as described above for the method for bonding substrates according to the invention (including the embodiments and preferred features), in particular a nonwoven fabric (preferably hydrophilic).

The protective layer can be easily removed without modifying the adhesive layer, which remains attached to the support layer, because the protective layer is a non-stick layer. Preferably, the protective layer comprises a silicone-based material.

The multilayer system is preferably packaged in the form of a winding around a reel (or roll), the dimensions of which can vary within a wide range. Thus, the diameter of such a roll may range from 0.25 m to 1 m, and its width from 0.25 m to 2 m. Such packaging makes it possible to store the multilayer system until use.

For example, the multilayer system can be stored until the protective layer is removed, exposing the adhesive layer. Once exposed, the adhesive layer can be reactivated by heat (e.g. between 130°C and 180°C), then contacted with a substrate, so that the composition bonds the support layer and said substrate. The substrate is preferably as described above for the method for bonding substrates according to the invention (including the embodiments and preferred features).

All the embodiments described above can be combined with each other. In particular, the various aforementioned ingredients in the composition, and in particular the preferred embodiments, can be combined with each other.

The following examples illustrate the invention without limiting it.

### EXAMPLES

### Example 1: Materials and methods

### Materials

The following materials were implemented:
- Vistamaxx^{™} 6502 (by ExxonMobil): metallocene isotactic polypropylene with random ethylene distribution (13 wt%) having a number average molecular weight of about 47000 g/mol, a melt index at 190°C and 2.16 kg (ASTM D1238) of about 21 g/10 min, a Vicat softening temperature of about 51°C and an enthalpy of fusion of about 9.8 J/g, non-amorphous single-site catalyzed polyolefin,
- Vistamaxx^{™} 8380 (by ExxonMobil): metallocene isotactic polypropylene with random ethylene distribution (12 wt%) having a number average molecular weight of about 16000 g/mol, a viscosity at 190°C of about 7570 mPa.s, a melting temperature of about 100°C and an enthalpy of fusion of about 21.5 J/g, non-amorphous single-site catalyzed polyolefin,

- VESTOPLAST^{®} 508 (by EVONIK): amorphous ethylene, propylene and 1-butene copolymer having a viscosity at 190°C (DIN 53019) of about 8000 mPa.s and a ring and ball softening point of about 84°C, amorphous poly(alpha-olefin),
- KRATON^{™} D1152 E (by KRATON): linear block copolymer based on styrene and butadiene, styrene block copolymer,
- SUKOREZ^{®} SU-420 (by KOLON): hydrogenated C5/C9 hydrocarbon resin having a softening point of about 120°C, tackifying resin,
- SUKOREZ^{®} SU-210 (by KOLON): hydrogenated dicyclopentadiene/C5 hydrocarbon resin having a softening point of about 110°C, tackifying resin,
- CALSOL 5550 (by CALUMET): naphthenic oil (CAS: 64742-52-5), plasticizer,
- Sarawax SX105 (by Shell): Fischer-Tropsch wax (CAS: 8002-74-2) having a congealing point between 101°C and 108°C, wax,
- Irganox^{®} 1010 (by BASF): pentaerythritol tetrakis[3-(3,5-di-tert-butyl-4-hydroxyphenyl)propionate] (CAS: 6683-19-8), antioxidant.

### Methods

The viscosity of each composition was measured at 163°C according to the standard ASTM D3236, using a Brookfield viscometer (spindle 27).

For measuring peel strengths, a laminate A2 was prepared as follows. Use was made, as a laminating device, of a machine operating continuously at a line speed of approximately 200 m/minute (Coater CTL 4400 sold by NORDSON). In this machine, the coating nozzle is a slot-die nozzle. The two substrates employed were:
- a 22 g/m² polyethylene (PE) film breathable which has a width of 20 cm, and
- a 15 g/m² spunbond hydrophile nonwoven sheet of the same width, which is composed of fibers of polypropylene (PP).

These two substrates were packaged as a roll with a width of 20 cm.

The composition to be tested was heated in the melting pot at a temperature of 150°C. It was then coated at the same temperature and at a coating weight of approximately 3 g/m² on the PE film. The resulting coating pattern was adequate and typical of a good sprayability (and processability): a 2.54 cm wide non-continuous layer made of an offset spiraled bead, centered on the PE film and along an axis perpendicular to the axis of the reel.

The nonwoven (PP) sheet was then put into contact with the coated surface of the PE film by means of a nip roll applying a pressure of 1 bar.

The laminate A2 obtained was then packaged as a roll and left for 24 hours at ambient temperature (23°C) and at 50% relative humidity.

A rectangular strip measuring 2.54 cm by approximately 10 cm was then cut out in the coated central area of the laminate to obtain a test specimen.

The two individual substrates were separated, starting from one end of the test specimen and over approximately 2 cm. The two free ends thus obtained were fixed to two clamping devices respectively connected to a stationary part and a movable part of a tensile testing device which are located on a vertical axis. While a drive mechanism communicates to the movable part a uniform speed of 300 mm/minute, resulting in the separation of the two substrates (the separated ends of which are gradually displaced along a vertical axis while forming an angle of 180°), the stationary part, connected to a dynamometer, measures the force withstood by the test specimen thus held.

The initial dry peel strength was measured at 23°C and corresponds to the peel measured after having packaged the laminate A2 and left it for 96 hours at 23°C.

The dry peel strength after aging was measured at 23°C as the initial dry peel strength, except that the specimen was kept for 2 weeks in an oven at about 55°C and under ambient air, then kept for 96h at 23°C before performing the 180° peel test.

The initial wet peel strength and the wet peel strength after aging were measured respectively as the initial dry peel strength and the dry peel strength after aging, except that the specimen was immersed in deionized water at 23°C for 2 min, then the water was wiped off before performing the 180° peel test.

### Example 2: Preparation and properties of hot melt adhesive compositions

Compositions 1-5 were prepared by mixing the ingredients indicated in Table 1 below (the percentages being weight percentages with respect to the total weight of the composition): all the ingredients except tackifying resin(s) were heated and melted at 150°C and at atmospheric pressure while mixing until a homogeneous mixture was obtained. Then, addition of the tackifying resin(s) was carried out at the same temperature and mixed until a homogeneous mixture was obtained.

**Table 1: Ingredients of compositions 1-5**

| **Composition** | **1 (comp)** | **2 (comp)** | **3 (inv)** | **4 (comp)** |
|---|---|---|---|---|
| Vistamaxx^{™} 8380 | 44.5 | - | 25.9 | 25.9 |
| Vistamaxx^{™} 6502 | 2 | - | 2.0 | 2.0 |
| VESTOPLAST^{®} 508 | - | - | 17.6 | 17.6 |
| KRATON^{™} D1152 E | - | 19 | - | - |
| SUKOREZ^{®} SU-420 | - | 21.2 | - | - |
| SUKOREZ^{®} SU-210 | 40 | 35.8 | 39.1 | 42.0 |
| CALSOL 5550 | 13 | 23 | 12.0 | 12.0 |
| Sarawax SX105 | - | 0.5 | 2.9 | - |
| Irganox^{®} 1010 | 0.5 | 0.5 | 0.5 | 0.5 |

Their properties were then evaluated as described in Example 1 and the results are indicated in Table 2.

**Table 2: Properties of compositions 1-5 (ND: not determined)**

| **Composition** | **1 (comp)** | **2 (comp)** | **3 (inv)** | **4 (comp)** |
|---|---|---|---|---|
| Viscosity (mPa.s) | 4600* | 2150 | 2190 | 2670 |
| Initial dry peel strength (N/25.4 mm) | 2.3 | 0.9 | 1.5 | 0.8 |
| Dry peel strength after aging (N/25.4 mm) | 0.7 | 0.25 | 1.0 | 0.4 |
| Initial wet peel strength (N/25.4 mm) | 1.1 | 0.8 | 1.3 | 0.8 |
| Wet peel strength after aging (N/25.4 mm) | 0.1 | 0.4 | 1.2 | 0.4 |

| | | | | |
|---|---|---|---|---|
| *: viscosity measured at 149°C | | | | |

The composition 3 according to invention makes it possible to significantly improve both the dry and the wet peel strength after aging, while having an appropriate initial dry and wet peel strength.

In particular, composition 3 according to invention has improved peel strengths (initial dry and wet peel strength, as well as dry and wet peel strength after aging) compared to comparative composition 2, which is based on a styrene block copolymer instead of polyolefins.

Furthermore, adding a combination of an amorphous poly(alpha-olefin) and a wax to a composition based on non-amorphous single-site catalyzed polyolefins surprisingly increases the peel strengths after aging to at least 1.0 N/25.4 mm (comparison of composition 3 according to the invention with comparative compositions 1 and 4).

## Claims

1. A hot melt adhesive composition comprising: a first non-amorphous single-site catalyzed polyolefin (PO1), a second non-amorphous single-site catalyzed polyolefin (PO2) having a number average molecular weight higher than PO1, an amorphous poly(alpha-olefin) and a wax.

2. The hot melt adhesive composition according to claim 1, wherein the PO1 and/or the PO2 are metallocene-catalyzed.

3. The hot melt adhesive composition according to claim 1 or 2, wherein the PO1 and/or the PO2 are each a homopolymer or copolymer of propylene.

4. The hot melt adhesive composition according to any one of claims 1 to 3, wherein the PO1 has a number average molecular weight comprised between 2000 g/mol and 40000 g/mol, preferably between 7000 g/mol and 30000 g/mol, more preferably between 11000 g/mol and 20000 g/mol.

5. The hot melt adhesive composition according to any one of claims 1 to 4, wherein the PO2 has a number average molecular weight comprised between 20000 g/mol and 300000 g/mol, preferably between 30000 g/mol and 150000 g/mol, more preferably between 40000 g/mol and 70000 g/mol.

6. The hot melt adhesive composition according to any one of claims 1 to 5, wherein the number average molecular weight of the PO2 is at least 1.5 times higher than the number average molecular weight of the PO1, preferably at least 2 times higher, more preferably at least 2.5 times higher.

7. The hot melt adhesive composition according to any one of claims 1 to 6, wherein the amorphous poly(alpha-olefin) is obtained by polymerizing one or more alpha-olefin monomers selected from ethylene, propylene, 1-butene, 2-methyl-1-propene, 1-pentene, 3-methyl-1-butene, 3-methyl-1-pentene, 1-hexene, 1-heptene, 1-octene, and mixtures thereof.

8. The hot melt adhesive composition according to any one of claims 1 to 7, wherein the amorphous poly(alpha-olefin) has a viscosity at 190°C between 1000 mPa.s and 20000 mPa.s, preferably between 4000 mPa.s and 12000 mPa.s.

9. The hot melt adhesive composition according to any one of claims 1 to 8, wherein the wax is a paraffin wax and/or a Fischer-Tropsch wax.

10. The hot melt adhesive composition according to any one of claims 1 to 9, further comprising a tackifying resin.

11. The hot melt adhesive composition according to any one of claims 1 to 10, comprising less than 5 % by weight of an acid-modified ingredient with respect to the total weight of said composition, preferably less than 1 % by weight.

12. The hot melt adhesive composition according to any one of claims 1 to 11, further comprising a plasticizer, preferably selected from naphthenic oils, paraffinic oils, and mixtures thereof.

13. Use of the hot melt adhesive composition according to any one of claims 1 to 12 as an adhesive for bonding two substrates together, or as a coating on the surface of a substrate.

14. A method for bonding substrates comprising:
- heating the hot melt adhesive composition according to any one of claims 1 to 12, for at least a period of time long enough to render said composition liquid enough to be applied on a substrate, then
- coating said composition on a surface of a first substrate, then
- contacting the coated surface of the first substrate with a surface of a second substrate, so as to form an adhesive joint bonding the two substrates.

15. An article comprising the hot melt adhesive composition according to any one of claims 1 to 12.
